# EUROPÄISCHE PATENTSCHRIFT

(11) **EP 2 102 042 B1**
(45) Veröffentlichungstag und Bekanntmachung des Hinweises auf die Patenterteilung: **01.12.2010**
(21) Anmeldenummer: 07818368.8
(22) Anmeldetag: 24.09.2007
(51) Int. Cl.: B60S 1/38

(54) **SCHEIBENWISCHERGUMMI**
WINDSCREEN WIPER RUBBER
LAME CAOUTCHOUC D'ESSUIE-GLACE

(30) Priorität: 05.12.2006 DE 102006057231
(43) Veröffentlichungstag der Anmeldung: 23.09.2009
(73) Patentinhaber: Volkswagen Aktiengesellschaft, 38436 Wolfsburg (DE)
(72) Erfinder: FANGMEIER, Wilhelm, 38442 Wolfsburg (DE)
(86) Internationale Anmeldenummer: PCT/EP2007/008281
(87) Internationale Veröffentlichungsnummer: WO 2008/067864

(56) Entgegenhaltungen:
- WO-A-2006/106249
- DE-A1- 3 903 305
- DE-A1- 4 319 139
- DE-A1- 19 524 108

## Beschreibung

Die Erfindung betrifft einen Scheibenwischergummi als Bestandteil eines geräuschgedämpften Wischerblattes, insbesondere eines haltebügellosen (gelenkfreien) Wischerblattes.

Haltebügellose Wischerblätter weisen einen langgestreckten Scheibenwischergummi als Wischleiste, der üblicherweise aus einem mit seitlichen Längsnuten versehenen Oberteil und einem mit diesem über zumindest einen Kippsteg verbundenen Unterteil mit einer Wischlippe besteht, und ein mit diesem verbundenes und gegenüber der Fahrzeugscheibe konkav gekrümmtes, federelastisches Tragelement auf. Dieses ist insbesondere aus zwei parallelen Federschienen gebildet, die in den im Oberteil ausgebildeten Längsnuten angeordnet sind. Das Tragelement und der Scheibenwischergummi sind über an deren Enden befestigte Abschlusskappen miteinander verbunden und weisen in der Mitte eine Anschlußvorrichtung zur Anordnung an einem Wischerarm eines Scheibenwischers auf.

Beim Betreiben des Scheibenwischers wird die Wischlippe um den zumindest einen Kippsteg nach der jeweiligen Rückseite des über die Fahrzeugscheibe hin- und herbewegten Wischerblattes gekippt und am Bewegungs-Umkehrpunkt des Scheibenwischers nach der jeweils anderen, nun die Rückseite bildenden Seite umgelegt. Dieses Umlegen oder auch Umschnappen der Wischlippe ist mit einer störenden Geräuschentwicklung verbunden, die insbesondere durch ein Aufschlagen der jeweiligen Längskante des Unterteils auf die über dieser ausgebildeten Fläche des Oberteils im Bereich des Kippsteges hervorgerufen wird und einen hohen Geräuschpegel im Fahrzeug erzeugen kann.

Zur Dämpfung dieser Geräuschentwicklung ist aus der DE 9104461 U1 eine Wischleiste (Scheibenwischergummi) bekannt, bei der zwischen dem Oberteil und dem Unterteil beidseits des Kippsteges eine Dämpfungsleiste vorgesehen ist, die verhindert, dass die jeweilige Längskante des Unterteils auf die dieser zugewandten Fläche des Oberteils aufschlägt. Die Dämpfungsleiste bewirkt, dass die Längskante des Unterteils beim Umlegen oder auch Umschnappen der Wischlippe zunächst gegen die Dämpfungsleiste schlägt, die elastisch nachgibt und in Richtung der Fläche des Oberteils energieverzehrend gebogen und bis zur Anlage "auf Block" an diese geschlagen wird. Der Aufschlag der Längskante des Unterteils auf die jeweilige Dämpfungsleiste wird durch diese weicher, und das entstehende

Aufschlaggeräusch wird verringert. Allerdings schlägt dabei auch die jeweilige Dämpfungsleiste auf die Fläche des Oberteils auf und verursacht ihrerseits ein zusätzliches Aufschlaggeräusch. Bei Wischblättern mit federelastischen Tragelemente ist die insgesamt erzielte Geräuschdämpfung unzureichend, insbesondere bei sehr langen Wischerblättern. Zur weiteren Geräuschdämpfung ist dazu schon vorgeschlagen worden, im Oberteil einen Deformationsraum für die jeweilige Dämpfungsleiste anzuordnen, in den diese beim Aufschlag auf das Oberteil hineingedrückt und deformiert wird, dabei Aufprallenergie aufnimmt und so den Aufprall auf das Oberteil dämpft.

Es ist auch schon vorgeschlagen worden, in den zwischen dem Oberteil, dem Unterteil und dem Kippsteg gebildeten Spalten vom Kippsteg nach außen erstreckte Dämpfungsstege anzuformen, die verhindern, dass die jeweilige Längskante des Unterteils auf die über dieser ausgebildete Fläche des Oberteils schlägt. Ebenso ist vorgeschlagen worden, in dem Übergangsbereich zwischen dem Oberteil und der im Querschnitt wesentlich schmaleren Wischlippe entlang deren Längserstreckung Dämpfungsstränge aus einem Material einzuformen, das eine wesentlich geringere Shore-Härte als das Material der Wischleiste aufweist, wobei die Dämpfungsstränge mit dem gummielastischen Material der Wischleiste stoffschlüssig verbunden sind.

Ferner ist es aus der DE 39 03 305 A1 bekannt, im Bereich des Kippsteges jeweils einen Hohlraum vorzusehen, der eine an verschiedene Betriebsbedingungen des Scheibenwischers angepasste Schwenkbewegung der Wischlippe ermöglichen soll, wozu das Volumen des Hohlraumes durch eine Veränderung seines Innendruckes einstellbar ist. Ein Scheibenwischergummi mit einem mit Luft gefüllten Hohlraum zur Erhöhung dessen Flexibilität und Elastizität ist auch aus der US 4 847 940 A bekannt. Zur Verringerung der Ratterneigung eines Wischerblattes ist mit dem Gegenstand nach der DE 195 24 108 A1 vorgeschlagen worden, im Oberteil eine Füllung, insbesondere eine viskose Flüssigkeit, einzulassen, die leichter verformbar als dessen Material und/ oder zumindest teilweise plastisch ist.

Dokument DE-4319139 A1 offenbart des Gegenstand des Oberbegriffs des Anspruchs 1.

Es ist Aufgabe der Erfindung, einen Scheibenwischergummi nach dem Oberbegriff des Anspruchs 1 so zu gestalten, dass bei dem mit diesem gebildeten Wischerblatt die Umlegegeräusche gedämpft sind und dass dieser auf einfache Weise herstellbar ist.

Diese Aufgabe wird bei einem Scheibenwischergummi nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht in einem Scheibenwischergummi für ein geräuschgedämpftes Wischerblatt eines Scheibenwischers, mit einem Querschnittsprofil, das ein Oberteil zur Verbindung mit einem federelastischen Tragelement und ein mit dem Oberteil über einen Kippsteg verbundenes Unterteil mit einer Wischlippe sowie einen im Oberteil ausgebildeten Hohlraum umfasst. Dabei ist der Hohlraum derart ausgedehnt, dass dieser beidseits des Kippsteges jeweils einen Wandungsbereich im Oberteil ausbildet, der durch die jeweilige oberteilseitige Längskante des Unterteils deformierbar ist. Zudem ist das Querschnittsprofil derart gestaltet, dass dieses zumindest im Bereich vom Scheitel des Oberteils bis zum Hohlraum zwei im spitzen Winkel, vorzugsweise in einem Winkel von 20° bis 60°, insbesondere symmetrisch zueinander angeordnete und um eine senkrecht zum Querschnittsprofil verlaufende Achse relativ zueinander klappbare und miteinander korrespondierende und durch das Tragelement aneinander fixierbare Profilschenkel aufweist.

Diese Gestaltung ermöglicht die Herstellung des Scheibenwischergummis einstückig als offenes Profil in einem Extruder mit einem die Konturen des Querschnittsprofils formenden Werkzeug auf einfache Weise und dessen Verbindung als geschlossenes Betriebsprofil mit dem Tragelement durch Aufeinanderzuklappen der beiden Profilschenkel. Dabei wird auch der Hohlraum geschlossen und bildet oberteilseitig im Bereich zwischen dem Kippsteg und der Außenkontur des Oberteils jeweils den durch die jeweilige oberteilseitige Längskante des Unterteils deformierbaren Wandungsbereich aus. Bei Anschlagen einer Längskante an den jeweiligen Wandungsbereich beim Umlegen der Wischlippe im jeweiligen Bewegung-Umkehrpunkt kann der Wandungsbereich in den Hohlraum zurückweichen, der einen Deformationsraum darstellt, und dabei Energie abbauen. Dieses aufprallweiche Anschlagen ist mit einer Senkung der Umlegegeräusche verbunden.

Die beiden Profilschenkel können dabei vom Scheitel des Oberteils bis in den Bereich der Wischlippe hineinreichen. Damit kann der spitze Winkel klein gehalten werden, und es wird die durch das Zusammenklappen der Profilschenkel erzeugte Streckung des Materials an den Außenflanken minimiert.

Damit der Hohlraum für Feuchtigkeit und Schmutz unzugänglich bleibt, insbesondere beim Betreiben des Scheibenwischers, ist es von Vorteil, dass die beiden Profilschenkel an den aneinanderliegenden Flächen, insbesondere im Oberteil, mit ineinandergreifenden längserstreckten Dichtelementen versehen sind.

Selbstverständlich kann an dem Querschnittsprofil je nach Bauart des Wischerblattes ein Windleitprofil angeformt sein. Vorzugsweise ist dieses an einem der Profilschenkel angeordnet und dabei so ausgebildet, dass dieses oberteilseitig im geschlossenen Zustand des Querschnittprofils den anderen Profilschenkel überdeckt und zugleich als Dichtung dient. Das Windleitprofil kann jedoch auch separat ausgebildet und am Tragelement angeordnet sein.

Die Erfindung wird nachstehend an einem Ausführungsbeispiel erläutert. In den zugehörigen Zeichnungen zeigen:
- Fig. 1:: einen extrudierten Scheibenwischergummi,
- Fig. 2:: ein haltebügelloses geräuschgedämpftes Wischerblatt mit dem Scheibenwischergummi im Querschnitt (Ruheposition) und
- Fig. 3:: das Wischerblatt während einer Wischbewegung.

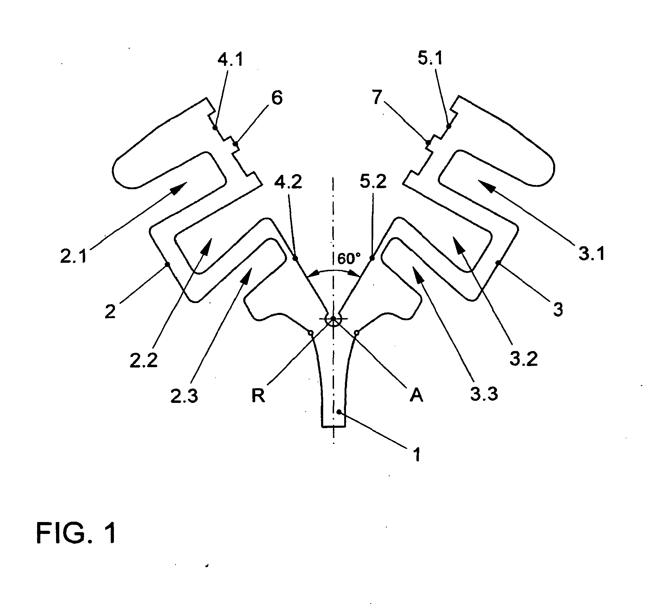

In Fig. 1 ist ein Scheibenwischergummi im Querschnitt als Extrusionsprodukt gezeigt. Das Querschnittsprofil weist eine Wischlippe 1 und zwei im Winkel von 60° von dieser ausgehende und symmetrisch zu dieser und zu der durch diese gelegten Mittenebene M angeordnete Profilschenkel 2 und 3 auf. Diese sind mit einander zugeordneten Flächen 4 und 5 versehen, die mit ihren Teilflächen 4.1 und 4.2 bzw. 5.1 und 5.2 miteinander korrespondieren, und die um eine senkrecht zum Querschnittsprofil verlaufende Achse A relativ zueinander klappbar sind und im zusammengeklappten Zustand aneinander anliegen. Die Achse A verläuft in einer zwischen den Profilschenkeln 2 und 3 ausgebildeten Ringnut R. An den der Wischlippe 1 abgewandten Teilflächen 4.1 und 5.1 sind achsparallele, längserstreckte Dichtelemente 6 und 7 für einen gegenseitigen Eingriff ausgebildet, und zwar an der Teilfläche 4.1 Vorsprünge 6 und an der Teilfläche 5.1 Nuten 7 für einen Eingriff der Vorsprünge 6. In den Profilschenkein 2 und 3 sind jeweils achsparallele Längsnuten 2.1, 2.2 und 2.3 bzw. 3.1, 3.2 und 3.3 ausgeformt.

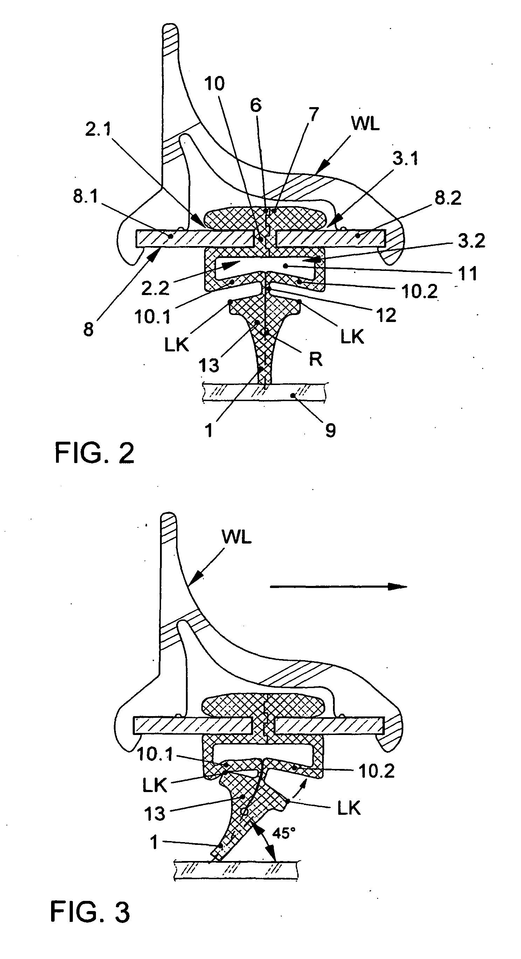

Die Fig. 2 und 3 zeigen jeweils ein mit dem Scheibenwischergummi gebildetes Wischerblatt, an dem der Scheibenwischergummi an einem federelastischen Tragelement 8 angeordnet ist, das zwei achsparallele Federschienen 8.1 und 8.2 aufweist und gegenüber einer Fahrzeugscheibe 9 in bekannter Weise konkav gekrümmt ist (nicht sichtbar). Dabei ist die Krümmung größer als die der Fahrzeugscheibe 9, damit das Wischerblatt 1 in jeder Position seiner Bewegungsbahn an dieser anliegt. Überdies ist das Wischerblatt 1 mit einem am Tragelement angeordneten Windleitprofil WL versehen.

Fig. 2 zeigt das Wischerblatt 1 in seiner Ruheposition an der Fahrzeugscheibe 9. Aus der Fig. ist ersichtlich, dass der zwischen den in den Längsnuten 2.1 bzw. 3.1 angeordneten Federschienen 8.1 und 8.2 eingespannte Scheibenwischergummi ein Oberteil 10 mit einem Hohlraum 11, der aus den beiden Längsnuten 2.2. und 3.2 gebildet ist, und einen Kippsteg 12 ausbildet, der durch die Längsnuten 2.3 und 3.3 gestaltet ist, an den sich dann das Unterteil 13 mit der Wischlippe 1 zur Anlage an der Fahrzeugscheibe 9 anschließt. Die Dichtelemente 6 und 7 greifen ineinander ein und dichten den gebildeten Hohlraum 11 ab. Der Hohlraum 11 ist derart ausgedehnt, dass dieser beidseits des Kippsteges 12 jeweils einen (Oberteil-) Wandungsbereich 10.1 bzw. 10.2 ausbildet, der durch die jeweilige oberteilseitige Längskante LK des Unterteils 13 deformierbar ist.

Fig. 3 zeigt das bewegte Wischerblatt 1 in der durch den Pfeil angegebenen Bewegungsrichtung. Die Wischlippe 1 ist dabei um 45° entgegen der Bewegungsrichtung geneigt. Die der Bewegungsrichtung entgegengerichtete Längskante LK des Unterteils 13 stützt sich am Wandungsbereich 10.1 ab und ist dabei unter Deformation desselben in diesen eingedrückt. Bei Erreichen des Bewegungs-Umkehrpunktes des Scheibenwischers wird das Unterteil 13 mit der Wischlippe 1 nach der anderen Seite umgelegt (Pfeil an der Längskante LK). Dabei stößt die in der Fig. in der Bewegungsrichtung vorn liegende Längskante LK (Pfeil) an den Wandungsbereich 10.2 und drückt diesen ein Stück in den als Deformationsraum dienenden Hohlraum 11. Durch die Deformierbarkeit des Wandungsbereiches 10.2 erfolgt das Anstoßen weich und geräuschgedämpft.

### Bezugszeichenliste

- 1: Wischlippe
- 2: Profilschenkel
- 2.1 - 2.3: Längsnut
- 3: Profilschenkel
- 3.1 - 3.3: Längsnut
- 4: Fläche
- 4.1, 4.2: Teilfläche
- 5: Fläche
- 5.1, 5.2: Teilfläche
- 6: Vorsprung
- 7: Nut
- 8: Tragelement
- 8.1, 8.2: Federschiene
- 9: Fahrzeugscheibe
- 10: Oberteil
- 10.1, 10.2: Wandungsbereich
- 11: Hohlraum
- 12: Kippsteg
- 13: Unterteil
- A: Achse
- M: Mittenebene
- LK: Längskante
- R: Ringnut
- WL: Windleitprofil

## Patentansprüche

1. Scheibenwischergummi als Bestandteil eines geräuschgedämpften Wischerblattes eines Scheibenwischers, mit einem Querschnittsprofil, das ein Oberteil zur Verbindung mit einem federelastischen Tragelement und ein mit dem Oberteil über einen Kippsteg verbundenes Unterteil mit einer Wischlippe sowie einen im Oberteil ausgebildeten Hohlraum (11) umfasst, der derart ausgedehnt ist, dass dieser beidseits des Kippsteges (12) jeweils einen Wandungsbereich (10.1, 10.2) im Oberteil (10) ausbildet **dadurch gekennzeichnet, dass** dder Hohlraum durch die jeweilige oberteilseitige Längskante (LK) des Unterteils (13) deformierbar ist, und dass das Querschnittsprofil zumindest im Bereich vom Scheitel des Oberteils (10) bis zum Hohlraum (11) zwei im spitzen Winkel zueinander ausgebildete und um eine senkrecht zum Querschnittsprofil verlaufende Achse (A) relativ zueinander klappbare, miteinander korrespondierende und durch das Tragelement (8) aneinander fixierbare Profilschenkel (2, 3) aufweist.

2. Scheibenwischergummi nach Anspruch 1, **dadurch gekennzeichnet, dass** die Profilschenkel (2, 3) jeweils vom Scheitel des Oberteils (10) bis in den Bereich der Wischlippe (1) reichen.

3. Scheibenwischergummi nach Anspruch 1 oder 2, **dadurch gekennzeichnet, dass** an den aneinanderliegenden Flächen (4, 5) der beiden Profilschenkel (2, 3) ineinandergreifende längserstreckte Dichtelemente (6, 7) angeformt sind.

4. Scheibenwischergummi nach Anspruch 1, 2 oder 3, **dadurch gekennzeichnet, dass** das Querschnittsprofil symmetrisch ist.

5. Scheibenwischergummi nach einem oder mehreren der vorhergehenden Ansprüche, **dadurch gekennzeichnet, dass** das Querschnittsprofil oberteilseitig mit einem Windleitprofil versehen ist.

6. Scheibenwischergummi nach Anspruch 5, **dadurch gekennzeichnet, dass** das Windleitprofil an einem der Profilschenkel des Querschnittsprofils angeformt ist.

7. Scheibenwischergummi nach Anspruch 1, **dadurch gekennzeichnet, dass** die beiden Profilschenkel (2, 3) im Bereich der Achse (A) eine achsparallele Ringnut (R) ausbilden.

8. Scheibenwischergummi nach einem oder mehreren der vorhergehenden Ansprüche, **dadurch gekennzeichnet, dass** die Profilschenkel (2, 3) einen Winkel von 20° bis 60° einschließen.

9. Scheibenwischergummi nach einem oder mehreren der vorhergehenden Ansprüche, **dadurch gekennzeichnet, dass** dieser mit einem Extruder ausgeformt ist.

## Claims

1. Windscreen wiper rubber as part of a noise-damped wiper blade of a windscreen wiper, with a cross-sectional profile which comprises an upper part for connecting to a spring-elastic supporting element and a lower part which is connected to the upper part via a tilting web and has a wiping lip, and a cavity (11) which is formed in the upper part and is expanded .in such a manner that, on both sides of the tilting web (12), said cavity forms a respective wall region (10.1, 10.2) in the upper part (10), **characterized in that** the cavity can be deformed by the respective longitudinal edge (LK) on the upper-part side of the lower part (13), and **in that** the cross-sectional profile has, at least in the region from the apex of the upper part (10) to the cavity (11), two profile limbs (2, 3) which are formed at an acute angle to each other and are foldable relative to each other about an axis (A) running perpendicularly to the cross-sectional profile, correspond to each other and can be fixed on each other by means of the supporting element (8).

2. Windscreen wiper rubber according to Claim 1, **characterized in that** the profile limbs (2, 3) each extend from the apex of the upper part (10) into the region of the wiping lip (1).

3. Windscreen wiper rubber according to Claim 1 or 2, **characterized in that** longitudinally extended sealing elements (6, 7) which intermesh are integrally formed on the surfaces (4, 5) which bear against each other of the two profile limbs (2, 3).

4. Windscreen wiper rubber according to Claim 1, 2 or 3, **characterized in that** the cross-sectional profile is symmetrical.

5. Windscreen wiper rubber according to one or more of the preceding claims, **characterized in that** the cross-sectional profile is provided on the upper-part side with a wind-guiding profile.

6. Windscreen wiper rubber according to Claim 5, **characterized in that** the wind-guiding profile is integrally formed on one of the profile limbs of the cross-sectional profile.

7. Windscreen wiper rubber according to Claim 1, **characterized in that** the two profile limbs (2, 3) form an axially parallel annular groove (R) in the region of the axis (A).

8. Windscreen wiper rubber according to one or more of the preceding claims, **characterized in that** the profile limbs (2, 3) enclose an angle of 20° to 60°.

9. Windscreen wiper rubber according to one or more of the preceding claims, **characterized in that** said windscreen wiper rubber is formed by an extruder.

## Revendications

1. Lame caoutchouc d'essuie-glace faisant partie d'un balai d'essuie-glace amortissant les bruits pour un essuie-glace, comprenant un profilé en section transversale qui comprend une partie supérieure à connecter à un élément porteur élastique à ressort et une partie inférieure connectée à la partie supérieure par le biais d'une nervure basculante, avec une lèvre d'essuie-glace ainsi qu'une cavité (11) réalisée dans la partie supérieure, laquelle est étirée de telle sorte qu'elle constitue des deux côtés de la nervure basculante (12) à chaque fois une région de paroi (10.1, 10.2) dans la partie supérieure (10), **caractérisée en ce que** la cavité peut être déformée par l'arête longitudinale respective (LK), du côté de la partie supérieure, de la partie inférieure (13), et **en ce que** le profilé en section transversale présente, au moins dans la région du sommet de la partie supérieure (10) jusqu'à la cavité (11), deux branches profilées (2, 3) réalisées avec un angle aigu l'une par rapport à l'autre et pouvant être rabattues l'une par rapport à l'autre autour d'un axe (A) s'étendant perpendiculairement au profilé en section transversale, se correspondant mutuellement et pouvant être fixées l'une à l'autre par l'élément porteur (8).

2. Lame caoutchouc d'essuie-glace selon la revendication 1, **caractérisée en ce que** les branches profilées (2, 3) s'étendent à chaque fois depuis le sommet de la partie supérieure (10) jusque dans la région de la lèvre d'essuie-glace (1) .

3. Lame caoutchouc d'essuie-glace selon la revendication 1 ou 2, **caractérisée en ce que** des éléments d'étanchéité (6, 7) étirés en longueur et venant en prise l'un dans l'autre sont façonnés sur les surfaces adjacentes (4, 5) des deux branches profilées (2, 3).

4. Lame caoutchouc d'essuie-glace selon la revendication 1, 2 ou 3, **caractérisée en ce que** le profilé en section transversale est symétrique.

5. Lame caoutchouc d'essuie-glace selon l'une quelconque ou plusieurs des revendications précédentes, **caractérisée en ce que** le profilé en section transversale est pourvu du côté de la partie supérieure d'un profilé aérodynamique.

6. Lame caoutchouc d'essuie-glace selon la revendication 5, **caractérisée en ce que** le profilé aérodynamique est façonné sur l'une des branches profilées du profilé en section transversale.

7. Lame caoutchouc d'essuie-glace selon la revendication 1, **caractérisée en ce que** les deux branches profilées (2, 3) constituent une rainure annulaire (R) parallèle à l'axe dans la région de l'axe (A).

8. Lame caoutchouc d'essuie-glace selon l'une quelconque ou plusieurs des revendications précédentes, **caractérisée en ce que** les branches profilées (2, 3) forment un angle de 20° à 60°.

9. Lame caoutchouc d'essuie-glace selon l'une quelconque ou plusieurs des revendications précédentes, **caractérisée en ce qu'**elle est formée avec une extrudeuse.
